# EUROPÄISCHE PATENTSCHRIFT

(11) **EP 1 457 030 B1**
(45) Veröffentlichungstag und Bekanntmachung des Hinweises auf die Patenterteilung: **27.05.2009**
(21) Anmeldenummer: 02795173.0
(22) Anmeldetag: 12.12.2002
(51) Int. Cl.: H04M 3/533, H04M 3/53

(54) **VERFAHREN ZUM VERSENDEN EINER NACHRICHT AN EINE BELIEBIGE RUFNUMMER, MULTIMEDIALE NACHRICHT SOWIE VORRICHTUNG HIERFUER**
METHOD FOR SENDING A MESSAGE TO A CALL NUMBER, MULTIMEDIA MESSAGE AND DEVICE THEREFOR
PROCEDE POUR ENVOYER UN MESSAGE A UN NUMERO D'APPEL QUELCONQUE, MESSAGE MULTIMEDIA ET DISPOSITIF CORRESPONDANT

(30) Priorität: 21.12.2001 DE 10163277
(43) Veröffentlichungstag der Anmeldung: 15.09.2004
(73) Patentinhaber: Speech Design Carrier Systems GmbH, 22761 Hamburg (DE)
(72) Erfinder: MARTENS, Jan, 20259 Hamburg (DE)
(74) Vertreter: Kuhnen & Wacker
(86) Internationale Anmeldenummer: PCT/EP2002/014156
(87) Internationale Veröffentlichungsnummer: WO 2003/055190

(56) Entgegenhaltungen:
- EP-A- 1 056 268
- WO-A-01/57851
- US-A- 5 825 854
- US-A- 6 081 780

## Beschreibung

Die vorliegende Erfindung betrifft ein Verfahren zum Versenden einer Nachricht an eine beliebige Rufnummer nach dem Oberbegriff des Anspruchs 1, sowie eine Vorrichtung zur Erzeugung und zum Versand derselben nach Anspruch 9.

Aus der Praxis sind verschiedene Dienste bekannt, bei denen ein Nutzer eine meist kostenpflichtige Telefonnummer anruft, dort interaktiv und sprachgesteuert einen Musiktitel auswählt, anschließend hierzu seine Sprachnachricht aufspricht, die er einem bestimmten Empfänger bzw. Adressaten zukommen lassen möchte, und dann dessen Telefonnummer eingibt. Die aufgesprochene Nachricht wird dann zusammen mit der ausgewählten Musik dem Empfänger auf dessen Telefon übermittelt.

So wird beispielsweise unter der WebSite http://www.4phones.de der Versand von Sprachnachrichten zusammen mit Musik angeboten. Die aufgesprochenen Grüße werden zwischengespeichert, die gewünschte Musik wird ausgewählt, eine Telefonverbindung zum Adressaten aufgebaut und die zwischengespeicherten Grüße mit der ausgewählten Musik an die Rufnummer des Adressaten verschickt.

Ein anderes Angebot findet sich auf der WebSite http://www.vizzavi.fr, bei dem man via Internet zu einem bestimmten Thema ein bestimmtes Musikstück auswählen, die Rufnummer des Adressaten eingeben sowie eine Sprachnachricht aufsprechen kann, die dann mit der ausgewählten Musik unterlegt dem Adressaten an dessen Telefonanschluß übermittelt wird.

Diese bekannten Dienste erlauben jedoch nur die Versendung von aufgesprochenen Nachrichten, Grüßen oder Informationen ggf. zusammen mit einer ausgewählten Musik, soweit letztere beim Anbieter überhaupt verfügbar ist. Zudem ist bei all diesen Diensten die Eingabe meist rein sprachgesteuert, das heißt die Eingabe erfolgt über eine Audio-Schnittstelle, wie beispielsweise das Telefon oder ein Mikrophon am Personalcomputer des Nutzers, mit den damit zwangsweise verbundenen qualitativen Mängeln.

Jüngst wird auf der WebSite http://www.genion.de der SMS-Service "SMS2Speach" angeboten. Bei diesem Dienst wird eine als Text verfasste SMS vermittels einer Text-to-Speach-Engine (kurz: TTS-Engine) in Sprache umgewandelt und ans Telefon des Adressaten versandt. Die dabei zum Einsatz kommende TTS-Engine arbeitet nicht "on the fly" bzw. "just in time", sondern wandelt den Text zuerst in eine Voice- bzw. wav-Datei oder Tonbanddatei, speichert diese zwischen, ruft den Adressaten an und spielt dann, sofern eine Verbindung zu Stande kommt, die zwischengespeicherte Sprachnachricht ab. Diese Vorgehensweise ist sehr speicheraufwändig. Zudem ist beim Konvertieren und Zwischenspeichern der Textnachricht in eine Sprachnachricht noch gar nicht klar, ob überhaupt eine Telefonverbindung zu Stande kommt. Ferner ist dieses Verfahren zeitintensiv, da sämtliche Verfahrensschritte sequentiell nacheinander ablaufen. Zuletzt ist dieses Verfahren bereits insoweit unbefriedigend, wie die aus den spracheingabebasierten Diensten bekannte Beimischung von Musikstücken nicht möglich ist.

Eine mögliche Variante eines Verfahrens zur automatischen Umwandlung einer Textnachricht in eine Sprachnachricht ist beispielsweise aus der DE 198 04 276 A1 bekannt geworden. Mit Hilfe dieses Verfahrens soll sich ein Nutzer eine ihm zugestellte email am Telefon vorlesen lassen können, falls er gerade keine Möglichkeit hat, sich diese eMail an einem Computer anzeigen zu lassen.

Aus der WO 01/57851 A1 ist zudem ein Sprachsystem bekannt, mittels welchem Textnachrichten in Sprachnachrichten umgewandelt werden können, wobei die Sprachnachricht hierbei das Stimmuster eines Schauspielers, einer Comicfigur oder dergleichen haben kann. Zusätzlich ist es möglich, der Sprachnachricht weitere Audiosignale, beispielsweise bestimmte Soundeffekte oder Musik beizumischen. Zur Umwandlung der Textdatei in die Sprachdatei wird die original Textdatei zunächst in eine korrespondierende Textdatei umgewandelt, welche nur Wörter enthält, für die entsprechend vorgespeicherte Bausteine existieren. Wörter, für die keine vorgespeicherten Bausteine existieren werden dabei durch Synonyme ersetzt. diese umgewandelte Nachricht wird dann in die Sprachnachricht konvertiert, gespeichert und dem Nutzer auf Abruf vorgelesen.

Aus der US Patentschrift US 5,825,854 ist weiterhin ein Zugriffsystem für den Zugriff auf computergespeicherten Daten mittels eines Telefons bekannt. Hierbei ist es möglich, mittels eines Telefons auf dem Computer gespeicherte Daten, beispielsweise eMails, abzufragen. Das System wandelt die Textdateien dazu in Sprachdateien um, die dem Anwender vorgelesen werden. Dieser hat zudem unterschiedliche Möglichkeiten auf den entsprechenden Datensatz bzw. die Nachricht zu reagieren, beispielsweise indem er auf eine e-Mail antwortet. Zur Umwandlung des auf dem Computer befindlichen Textes "mischt" das System mittels eines Audiomechanismusses vorgespeicherte Audiodateien eines bestimmten Datenformates mit gespeicherten Text-to-Speech Nachrichten.

Darüber hinaus lehrt das US Patent US 6,081,780 ferner ein auf TTS und Sprachrhythmus basierendes Autorensystem, bei welchem eine Textnachricht in eine gesprochene Nachricht umgewandelt wird, wobei der gesprochene Text dann mit unterschiedlichen Stimmvorgaben verglichen wird, bis das vom Anwender gewünschte Stimmuster bestmöglich erreicht wird. Das Autorensystem bildet dann, basierend auf dem gesprochenen Text und vorgegebenen Parametern für das jeweilige Stimmuster die endgültige Sequenz, welche zusätzlich mit Hintergrundgeräuschen und/oder Musik hinterlegt werden kann. Diese Sequenz wird dann gespeichert und nach der Übertragung auf ein Endgerät des Verbrauchers synthetisiert bzw. vorgelesen. Der Nutzer hat auf seinem Endgerät dann zudem die Möglichkeit, alternative Sprachmuster auszuwählen, bzw. die gespeicherte Sequenz schneller, langsamer, etc. abzuspielen.

Die europäische Patentanmeldung EP 1 056 268 A2 lehrt schließlich ein Verfahren sowie eine Vorrichtung zum Erzeugen und Senden strukturierter Sprachnachrichten, wobei Textnachrichten in einem Nachrichtensystem gespeichert und auf Abruf des Nutzers in Sprachnachrichten umgewandelt werden. Der Verbraucher hat dabei die Möglichkeit, mit dem System zu interagieren, indem er, beispielsweise mittels Tastatur- oder Sprachbefehlen bestimmte, vorgespeicherte Aktionen ausführt (beispielsweise ein Navigieren in der gerade "vorgelesenen" Nachricht). Zusätzlich ist es möglich, der Sprachnachricht weitere Audiodateien, beispielsweise Musik, beizumischen, wobei die dem in Sprache umgewandelten Text beigefügten Audiodateien vorab an einer bestimmten Stelle des Systems gespeichert werden. Diese Audiodateien können dabei entweder direkt in die Sprachnachricht integriert werden oder mittels eines beigefügte Links abgerufen werden, wobei die Zieladresse des Links eine Adresse innerhalb des als Intranet ausgebildeten Netzwerkes des Nachrichtensystems ist.

Heutzutage ist jedoch die textliche Eingabe, vor allem als SMS oder e-Mail gerade bei der Jugend sehr beliebt und dementsprechend weit verbreitet. Zudem tauschen sich Jugendliche besonders gerne über die neuesten Trends in der Musikszene aus. Es besteht daher der Wunsch, musikverknüpfte Nachrichten auch über aktuelle Eingabemedien zu versenden.

Demzufolge ist es Aufgabe der vorliegenden Erfindung, ein Verfahren zum Versenden einer Nachricht an eine beliebige Rufnummer vorzuschlagen, bei dem eine Textnachricht verknüpft mit Musik dem Adressaten übermittelt werden kann. Insbesondere ist es Aufgabe der vorliegenden Erfindung, die bei den bekannten Diensten aufgrund der sprachlichen Eingabe der Nachricht unvermeidbaren qualitativen Mängel bei der Wiedergabe der Nachricht zu beseitigen, wobei die weiter bekannten Nachteile, wie beispielsweise lange Durchlaufzeiten oder hoher Speicherbedarf vermieden werden sollen.

Weiterhin ist es Aufgabe der vorliegenden Erfindung, eine Vorrichtung hierfür anzugeben.

Diese Aufgaben werden gelöst durch die Merkmale des Anspruchs 1 bzw. des Anspruchs 9.

Hierfür schlägt die vorliegende Erfindung ein Verfahren zum Versenden einer Nachricht an eine beliebige Rufnummer vor, bei dem die zu versendende Nachricht auf einer digitalen elektronischen Textnachricht basiert, deren nachrichtlicher Inhalt zum Versand an die gewünscht Rufnummer bzw. das zugehörige Telefon des Adressaten in eine Sprachnachricht konvertiert wird, wobei der Sprachnachricht ein vom Auftraggeber bzw. Nutzer des Verfahrens ausgewählter Musiktitel, Töne, Geräusche oder dergleichen als Hintergrundmusik beigemischt wird, und wobei erstmals zwischen den Absender und den Empfänger ein computergestützter Music Mail Server geschalten wird.

Auf diese Weise kann ein Nutzer des erfindungsgemäßen Verfahrens von jeglicher Ausgabeeinheit, die eine digitale elektronische Textnachricht erzeugt, sei es ein SMSfähiges Telefon oder Handy, eine Internet-Seite, ein eMail-Konto oder ein WAP- oder i-Mode-fähiges Mobile seine als Text eingegebenen Nachrichten an jede beliebige audiofähige Ausgabeeinheit, wie beispielsweise jedes beliebige Telefon in Form einer Sprachnachricht zusammen mit einem Musiktitel zur Ausgabe versenden.

Entgegen den bislang bekannten Verfahren, bei denen Text - falls ein solcher überhaupt als Input vorliegen darf, und nicht ohnehin ausschließlich eine Spracheingabe erfolgen muß - zunächst mit einer TTS-Engine in eine Voice- oder wav-Datei bzw. eine Tonband-Datei geschrieben wird, dann das ganze als Datenfile auf einem Server abgespeichert, danach der Empfänger angewählt, und sofern eine Verbindung zustande kommt, die abgespeicherte Nachricht vom Server wieder aufgerufen und dem Adressaten ohne weitere Bearbeitung zugespielt wird, wird bei der vorliegenden Erfindung eine geschriebene digitale elektronische Textnachricht - sei es via Internet, SMS, e-Mail, Web, WAP oder i-Mode - der erfindungsgemäßen Vorrichtung, insbesondere dem "THOR Music Mail Service", übersandt bzw. zugestellt, vermittels der darin enthaltenen Rufnummer vorab eine Verbindung zum gewünschten Adressaten aufgebaut, und lediglich dann, wenn diese zu Stande kommt, an Hand im Text enthaltener bestimmter Schlüsselwörter oder Steuerzeichen der vom Nutzer gewünschte Musiktitel aufgerufen und angespielt und der nachrichtliche Bestandteil der Textnachricht "just in time" bzw. "on the fly" mit einer entsprechend geeigneten TTS-Engine in die richtige Sprache automatisch umgewandelt und zeitgleich zusammen mit dem Musiktitel dem Empfänger übermittelt.

Hierbei erfolgt erstmalig die Konvertierung der im in digitaler elektronischer Form vorliegenden Text enthaltenen Information in eine Sprachinformation und das Hinzufügen der Toninformation des bestimmten Musiktitels parallel bzw. gleichzeitig in einem neuen Text/Audio-Musik-Streaming-Vorgang. Dabei werden in vorteilhafter Weise die Textdaten einem Text-Buffer zugeführt aus dem diese in einer Art Audio-File heraus gegeben werden, wobei dieses Audio-File bereits die Musikdaten beinhaltet, die parallel mit der Konvertierung von Text in Sprache zugeführt werden, so daß der fertige Sprache/Musik-Datenstrom ohne zeitlichen Verzug dem Empfänger übermittelt werden kann.

Durch das erfindungsgemäße Verfahren bzw. die erfindungsgemäße Vorrichtung, insbesondere den THOR Music Mail Service, ist es erstmals aufgrund der Anbindung an e-Mail, SMS, WAP, Internet oder i-Mode-Systeme in Kombination mit der Verwendung der Sprachausgabe am Telefon möglich, die textliche Eingabe von Nachrichten und die textliche Musikselektion sowie die kombinierte Ausgabe dieser beiden Medien, sprich Sprache und Musik, auf jedem beliebigen Telefon zu realisieren.

Nachdem die benötigten Daten, wie z.B. Adressat bzw. Empfänger, Musiktitel und Textnachricht über eine der unterstützen Eingabeschnittstellen, wie beispielsweise e-Mail-Konto, Internet-Zugang, SMS-, WAP-, oder i-Mode-fähiges Telefon im System vorhanden sind, wird sofort der Anruf des Empfängers eingeleitet. Erst nachdem die Verbindung hergestellt wurde, wird der Text in Sprache konvertiert und werden die Medien a) Text in Form von Sprache und b) Musik live gemischt und dem Empfänger übermittelt.

Dies bietet den großen Vorteil, daß keinerlei Zwischenspeicherung von irgendwelchen Voice- bzw. wav- oder Tonbanddateien erfolgen muss. Damit kann die aufwändige und kostenintensive Speicherarchitektur für derlei Dateien vollständig entfallen. Ferner bietet das erfindungsgemäße Verfahren den weiteren Vorteil, dass im Falle eines Nichtzustandekommens einer Telefonverbindung erst gar keine Konvertierung und damit keine unnötige Arbeit ausgeführt wird. Dies hilft entscheidend die Kosten beim Carrier bzw. Provider zu senken. Zudem ist das erfindungsgemäße Verfahren in vorteilhafter Weise entschieden schneller als die bekannten Verfahren, da die Konvertierung von Text zur Sprache und das Beimischen von Ton bzw. Musik just in time bzw. on the fly erfolgen und sämtliche Verfahrensschritte parallel abgearbeitet werden können.

Hierbei ergeben sich weitere Vorteile:

Die Sprache der Textnachricht kann automatisch erkannt und durch Selektion der entsprechenden TTS-Engine korrekt umgesetzt werden. Insbesondere ist es sogar möglich, bei längeren Textnachrichten eine Erkennung bzw. Umschaltung absatzweise oder gar wortweise durchführen zu lassen, so daß auch Nachrichten mit gemischten Sprachanteilen in unterschiedlichen Sprachen korrekt übermittelt werden können.

Weiterhin kann der Nutzer in vorteilhafter Weise die Sprache selbst aktiv durch entsprechende Steuerzeichen im Text umschalten, die Geschwindigkeit der später gesprochenen konvertierten Textnachricht ohne Veränderung der Tonhöhe verändern oder gar das Geschlecht der TTS-Engine wählen (weiblich/männlich), um seiner textlichen Nachricht die gewünschte Wärme oder Coolness zukommen zu lassen oder gar eine Art Rollenspiel abzubilden. Dies sind besondere Vorteile, die sich aus der just in time-Kombination von Text-to-Speech plus Musikmix ergeben.

Diese Interaktivität ist vorteilhaft nicht auf den Sender bzw. Nutzer beschränkt. Vielmehr kann auch der Empfänger interaktiv auf die ihm übermittelte Nachricht einwirken, da diese just in time aus der Textnachricht des Nutzers erzeugt und mit den gewünschten Musikdaten unterlegt im PCM-Format überspielt wird. So bleibt es dem Empfänger unbenommen, beispielsweise über Sprach- oder Tastatureingaben an seinem Telefon oder Handy während der Übermittlung der Nachricht eine andere TTS-Engine zu aktivieren, als jene, die vom Nutzer in dessen Nachricht vorgegeben war. Darüber hinaus kann der Adressat bzw. Empfänger ebenso wie der Nutzer bzw. Sender während des Abhörens der Nachricht die Geschwindigkeit oder die Tonhöhe variieren als auch das Geschlecht der TTS-Engine (männlich/weiblich) verändern. Zudem kann der Empfänger aufgrund der just in time Einspielung der Musikdaten einen anderen Musiktitel anfordern, falls ihm der vom Nutzer vorgegebene Musiktitel nicht gefallen sollte. Somit kann nicht nur der Nutzer interaktiv auf die Nachricht und deren Verarbeitung einwirken, sondern auch der Adressat bzw. Empfänger kann, sofern er es für nötig erachtet, während der Übersendung bzw. des Anhörens der Nachricht gestaltend interaktiv auf diese einwirken.

Durch die zusätzlichen Fähigkeiten, sowohl auf beliebige Internet basierte Musikquellen zugreifen zu können, als auch diese in das benötigte Audioformat umwandeln zu können, kann ein völlig neuartiger Dienst geschaffen werden. Beispielsweise könnte über die integrierte e-Mail-Schnittstelle eine Textnachricht empfangen werden, die einen Verweis bzw. Link auf eine externe, nicht auf dem erfindungsgemäßen System bzw. dem THOR Music Mail Service vorhandene Musik verweist. Dennoch könnte diese Musik vom erfindungsgemäßen System über den angegebenen Link von der dahinterstehenden Quelle geladen, konvertiert und in die lokale Musikdatenbank. übertragen werden. Damit wäre es möglich, neben dem auf dem erfindungsgemäßen System ohnehin vorhandenen Musiktiteln auch beliebige externe Quellen für das erfindungsgemäße Verfahren aufzubereiten.

Auf diese Weise könnte sogar ein Anbieter von Musik dieses erfindungsgemäße Verfahren vorteilhaft zur Verbreitung und Bewerbung der bei ihm verfügbaren Musik über die durch das Verfahren ermöglichte Audio-Ausgabe mit Text zurückgreifen, ohne eigene Studioaufnahmen für den gesprochenen Text mit entsprechend hohen Kosten anfertigen zu müssen. Das ganze kann dann zudem vollständig automatisiert über e-Mail, XML- oder andere standardisierte Schnittstellen abgewickelt werden.

Ferner können vorgefertigte Grußnachrichten, wie z.B. Geburtstagsgrüße, Weihnachtsgrüße, Neujahrsgrüße, Glückwünsche zur Geburt eines Kindes, Hochzeitsglückwünsche, oder dergleichen über ein in der Textnachricht enthaltenes entsprechendes Schlüsselwort oder Steuerzeichen aufgerufen und mit der gewünschten Musik dem Adressaten übermittelt werden. Entsprechende Schlüsselworte können beispielsweise mit der Raute "#" beginnen, so daß z.B. ein Weihnachtsgruß mit #XMAS, Geburtstagsgrüße mit #BIRTH, eine Einladung zu einer Feier mit #PARTY, ein Reminder mit #WAKEUP, Muskititel nach Position mit #laufenderNummer, ein Zeitversatz, Termin oder Datum mit #T2000 oder z.B. #D2412, oder dergleichen in der Textnachricht angefordert wird. In ähnlicher Weise kann man jegliche TOP 10 Musiktitel., usw., zusammen mit seinem diesbezüglichen Kommentar an seine Freunde oder Bekannten versenden.

Darüber hinaus kann ein Nutzer seiner jeweiligen Stimmung über den gewählten Musiktitel und die beim Abspielen gewünschte Lautstärke oder Geschwindigkeit als auch durch die von ihm ausgewählte TTS-Engine (männlich, weiblich, tiefe/hohe Stimme, etc.) beim Versenden seiner Nachrichten Ausdruck verleihen, sei es bei einer Einladung zu einer Party, zu einem Treffen oder dergleichen oder einfach nur, um Freude, Verliebtsein, Fröhlichkeit oder andere Gefühlsregungen dem Adressaten nachempfindbar mitteilen zu können.

Zudem sind mit dem erfindungsgemäßen Verfahren auch vertonte Erinnerungs- oder Wecknachrichten übermittelbar.

Weiterhin kann ein Nutzer seine Nachricht in Bezug auf deren Übermittlung mit einer Art Auslieferungsdatum versehen, so daß diese zu einem vom Nutzer vorbestimmten Zeitpunkt an den Adressaten übersandt wird, gleichgültig ob zwischen dem via Textnachricht erfolgten Auftrag des Nutzers an das erfindungsgemäße System und der Auslieferung der Sprachnachricht plus Musiktitel Minuten, Stunden, Tage oder gar Wochen oder Monate vergehen.

Ferner kann das erfindungsgemäße Verfahren neben den gebräuchlichen TTS-Engines, wie z.B. Eloquent von Speechworks, Leamout & Houspie von Realspeak, Babeltech, Telia Promoter, Elan oder jede andere SAPI kompatible TTS-Engine, auch bei uns unbekannte TTS-Engines einbinden, die nicht dem europäischen Standard entsprechen, so daß auch andere als die klassischen europäischen Sprachen, wie z.B. Englisch, Französisch oder Italienisch konvertiert und damit genutzt werden können.

Unabhängig davon ist das erfindungsgemäße Verfahren in der Lage dem Auftraggeber eine Rückmeldung zukommen zu lassen, wobei diese Rückmeldung - sei sie in Form von Text, sei sie in Form von Sprache - eine einfache Auftragsbestätigung oder auch eine Bestätigung, daß die gewünschte multimediale Nachricht an den angegebenen Adressaten mit der ausgewählten Musik versandt worden ist, sein kann, bis hin zu einer Überwachung und laufenden Mitteilung über den Status der vom Nutzer abgesandten multimedialen Nachricht oder gar zu einem Rückruf vom Adressaten zum Auftraggeber, um mit diesem ein Gespräch einzuleiten.

In besonders vorteilhafter Weise kann man mit dem erfindungsgemäßen Verfahren sogenannte Emoticons, das sind grafische Symbole, die Emotionen symbolisieren, verwenden, wie z.B. " 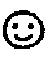 ", " 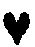 ", oder " 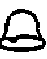 ", die dann automatisch in entsprechende sprachliche Ausdrücke konvertiert werden.

Nicht zuletzt kann das erfindungsgemäße Verfahren ein flexibles Abrechungssystem bereit stellen, so daß ein Carrier oder Provider die aufgelaufenen Kosten sauber und transparent gegenüber dem Auftraggeber abrechnen kann.

Ergänzend hierzu ist auch eine sogenannte "Schwarze Liste"-Datenbank verfügbar, in der Vorbehalte gegenüber bestimmten Inhalten, z.B. nicht jugendfreien WebSites oder dergleichen, eingetragen sind, so daß sichergestellt ist, daß die Nutzung des erfindungsgemäßen Verfahrens nicht gegen die öffentliche Ordnung oder die guten Sitten verstoßen kann.

Vorteilhafte Weiterbildungen der Erfindung ergeben sich aus den Merkmalen der Unteransprüche.

So erfolgt beispielsweise in einer bevorzugten Ausführungsform des Verfahrens die Konvertierung der Textnachricht in die Sprachnachricht vermittels einer geeigneten "Text-to-Speech-Engine" (kurz: TTS-Engine) just in time. Damit wird die Zeit, während der die Dienste des Anbieters in Anspruch genommen werden müssen, insbesondere die Rechenzeit auf dem entsprechenden Server des Anbieters, auf ein Minimum reduziert, so daß sowohl die Kosten beim Anbieter als auch die Kosten beim Nutzer möglichst gering bleiben. Ferner wird auf diese Weise die Reaktionszeit zwischen Absenden eines Auftrages und Eingang der multimedialen Sprachnachricht beim Adressaten - abzüglich der unvermeidbaren Übertragungszeit - so gut wie gegen Null gedrückt.

Bei einer weiter bevorzugten Ausgestaltung des Verfahrens erfolgt auch die Einspielung des ausgewählten Musiktitels, Töne, Geräusche oder dergleichen just in time. Dies hat wiederum eine positive Reduzierung der Bearbeitungs- als auch der Übertragungszeit zur Folge.

Ein besonders bevorzugtes Verfahren zeichnet sich durch folgende Schritte aus: a) Absenden einer digitalen elektronischen Textnachricht mit Angabe der Rufnummer des Adressaten sowie des gewünschten Musiktitels, Töne, Geräusche oder dergleichen, vorzugsweise von jedem beliebigen e-Mail-Konto, Internet-Zugang, SMS-, WAP- oder i-Mode-fähigen Telefon an einen computergestützten MusicMail-Dienst, insbesondere den THOR Music Mail Service; b) Analyse der Textnachricht auf nachrichtliche Bestandteile, Rufnummern, Schlüsselwörter und/oder anderer Steuerzeichen; c) Auswertung der Schlüsselwörter und/oder anderer Steuerzeichen; d) Anwahl und Aufbau einer Telefonverbindung zur gewünschten Rufnummer; e) Aufrufen und Einspielen der gewünschten Musikinformationen; f) Konvertieren der nachrichtlichen Bestandteile der Textnachricht in eine Sprachnachricht vermittels einer geeigneten TTS-Engine, vorzugsweise unter automatischer Bestimmung der korrekten Sprache; und g) Versenden der um die Musikinformation ergänzten Sprachnachricht an die angegebene Rufnummer. Bei diesem besonders bevorzugten Verfahren können insbesondere die letzten vier Verfahrensschritte zeitgleich bzw. parallel oder "just in time" ausgeführt werden.

Bei einer weiter bevorzugten Ausgestaltung des Verfahrens wird eine Ausführungsbestätigung an den Auftraggeber bzw. Nutzer versandt. Entsprechend einer weiter bevorzugten Ausführungsform des Verfahrens kann die multimediale Nachricht von jedem beliebigen e-Mail-Konto, Internet-Zugang, SMS-, WAP-oder i-Mode-fähigen Telefon in Auftrag gegeben werden, so daß jegliche Eingabeeinheit, die eine textliche Nachricht erzeugt und versendet, genutzt werden kann.

Bei einer weiter bevorzugten Ausführungsform des Verfahrens kann die multimediale Nachricht an jede beliebige audiofähige Ausgabeeinheit, insbesondere an jedes beliebige Telefon, versandt werden.

Die erfindungsgemäße multimediale Nachricht zeichnet sich dadurch aus, daß die Nachricht eine multimediale Sprachnachricht ist, die vorzugsweise durch das vorstehend beschriebene Verfahren, aus einer Textnachricht erzeugt wurde, welche in eine Sprachnachricht konvertiert und um die gewünschten Musikinformation ergänzt worden ist.

Die erfindungsgemäße Vorrichtung zur Erzeugung und zum Versand einer multimedialen Nachricht, insbesondere der vorstehend beschriebenen multimedialen Sprachnachricht, vorzugsweise unter Verwendung des vorstehend beschriebenen erfindungsgemäßen Verfahrens, weist eine computergestützte Eingangseinheit zum Empfang digitaler elektronischer Textnachrichten auf und verfügt weiterhin über eine computergestützte Auswerteeinheit zur Analyse der Textnachricht auf nachrichtliche Bestandteile, Rufnummern, Schlüsselwörter und/oder andere Steuerzeichen, eine Text-to-Speech-Engine zur Konvertierung des nachrichtlichen Bestandteils in eine Sprachnachricht, eine computergestütze Mischeinheit zum Aufrufen zur Beimischung der Toninformationen des gewünschten Musiktitels oder dergleichen als Hintergrundmusik und einer computergestützten Ausgabeeinheit zum Versand der multimedialen Sprachnachricht inklusive beigemischter Hintergrundmusik an die gewünschte Rufnummer.

Die Erfindung wird nachfolgend in Ausführungsbeispielen an Hand der Figuren der Zeichnung näher erläutert. Es zeigt:
- Fig. 1: eine schematisch vereinfachte Darstellung der technischen Funktionsweise des erfindungsgemäßen Verfahrens; und
- Fig. 2: eine schematisch vereinfachte Darstellung der Übertragungswege der Signale bzw. Nachrichten bei Verwendung des erfindungsgemäßen Verfahrens unter Ausnutzung einer Ausführungsform der erfindungsgemäßen Vorrichtung.

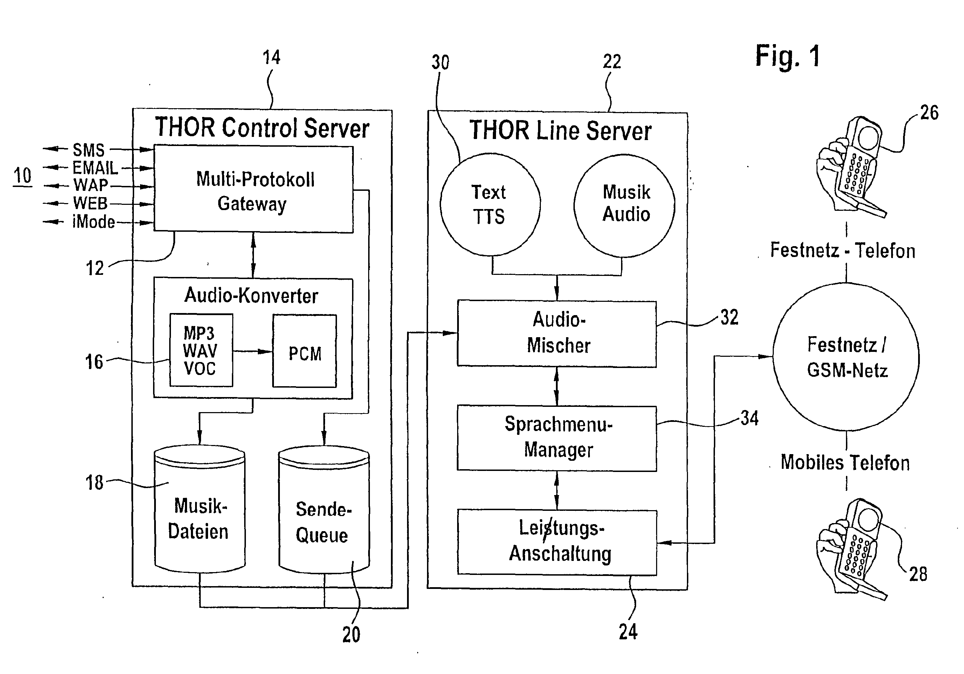

In Fig. 1 ist in einer schematisch vereinfachten Darstellung die technische Funktionsweise einer möglichen Ausführungsform des erfindungsgemäßen Verfahrens dargestellt. Ein Nutzer bzw. Absender erzeugt beispielsweise eine Music Mail bzw. eine digitale elektronische Textnachricht 10 über eine der angeschlossenen bzw. unterstützten Schnittstellen, wie z. B. SMS, eMail, Web oder WAP oder iMode, und sendet diese an den THOR Music Mail Service ab, wie dies durch die entsprechend beschrifteten Doppelpfeile am linken Bildrand symbolisiert ist. Über geeignete Routingmechanismen gelangt die Nachricht 10 beispielsweise in das THOR Music Mail System des THOR Music Mail Service der Anmelderin. Dabei wird die Textnachricht 10 schlußendlich vom MultiProtokoll Gateway 12 des Control Servers 14 entgegen genommen.

Die empfangene Nachricht wird vom System bezüglich Absender, Format und Inhalt überprüft. Enthält die Nachricht einen Verweis auf externe Musikquellen, so wird der entsprechende Musiktitel von diesen externen Musikquellen geladen und in einem Audio-Konverter 16 beispielsweise aus einem MP3, WAV oder VOC-Format in ein PCM-Format umgewandelt. Die so aufbereiteten Musikdaten zuvor im System nicht vorhandener Musiktitel werden im PCM-Format in der Musikdatenbank 18 zu den dort bereits im System verfügbaren Musikdatensätzen abgelegt. Parallel wird der nachrichtliche Anteil der Textnachricht 10 in die globale Warteschlange bzw. Sende-Queue 20 gestellt. Ist das Musikstück, welches vom Absender gewünscht wird, bereits in der Datenbank 18 vorhanden, bedarf es selbstverständlich keiner weiteren Konvertierung der dort bereits im PCM-Format abgelegten Musikdaten.

Sobald ein Kanal des angeschlossenen THOR Line Server 22 frei ist, erhält dieser Kanal den Sendeauftrag und wählt dann vermittels einer Leitungs-Anschaltung 24 die gewünschte Empfängemummer über die Line Interface-Hardware an.

Antwortet der Adressat, bzw. nimmt dieser sein Festnetz-Telefon 26 oder sein mobiles Telefon 28 ab, bzw. meldet sich dessen Mailbox, so wird zunächst die gewünschte Musik angespielt. Durch Angabe frei definierbarer Steuerzeichen innerhalb der Nachricht kann der gewünschte Musiktitel hierfür, wie vorstehend erläutert, aus vorhandenen Datenbanken ausgewählt werden.

Nach einem frei einstellbaren Zeitraum wird die Lautstärke der Musik um einen frei definierbaren Pegel herabgesetzt und mit der Wiedergabe des Textes unter Zuhilfenahme der vorhandenen TTS-Engine 30 begonnen. Die Musik bzw. der gewählte Musiktitel läuft dabei parallel im Hintergrund weiter, wobei das Mixen der Audio-Daten des Musiktitels und der Audio-Daten der in Sprache konvertierten Textnachricht über einen geeigneten Audio-Mischer 32 erfolgen kann.

Ist die Textwiedergabe in Form von Sprache beendet, wird der Pegel der Musik wieder erhöht und für die Dauer eines frei definierbaren Zeitraums weiter gespielt und schließlich ausgeblendet.

Die Verbindung wird jetzt wahlweise beendet oder der Benutzer hat zusätzlich die Möglichkeit, über nachfolgende Sprachmenus mit Hilfe eines geeigneten Sprachmenu-Managers 34 weitere Aktionen, wie beispielsweise eine Nachricht erneut abhören, einen Rückruf an einen Absender einleiten, eine Verbindung mit dem Operator herstellen usw. durchzuführen. Die Steuerung des Menüs kann hierbei über DTMF-Eingaben oder Sprachkommandos erfolgen.

Das System schickt auf Wunsch eine Versandquittung über eine der angeschlossenen Protokolle zurück an den Absender. Zusätzlich kann eine Verrechnung über angeschlossene Billingsysteme erfolgen.

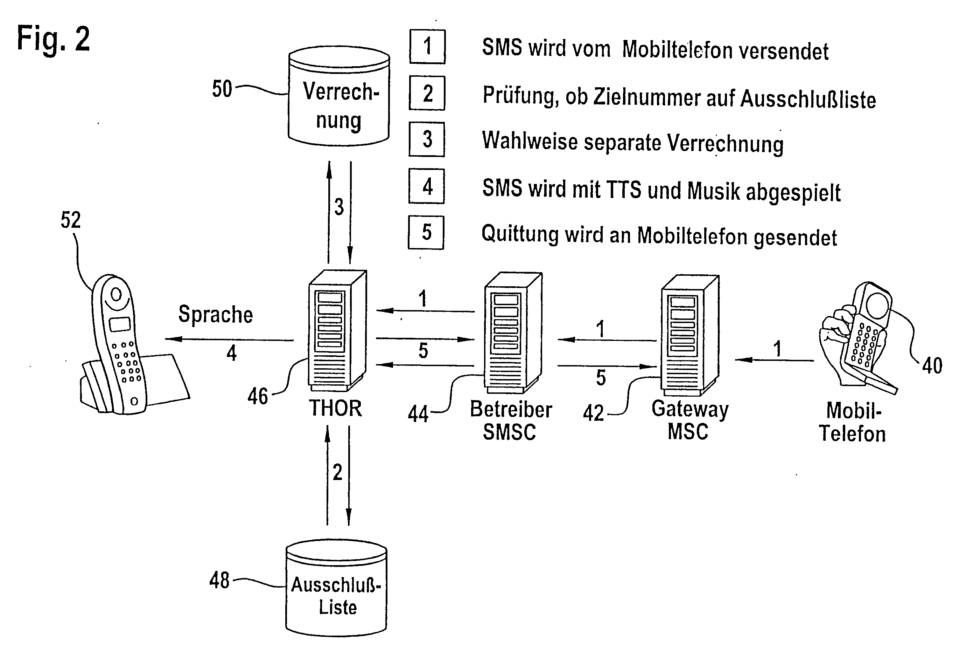

In Fig. 2 ist der zeitliche Ablauf beim Versand einer Nachricht anhand einer schematisch vereinfachten Darstellung der Übertragungswege der Signale bzw. Nachricht unter Verwendung des erfindungsgemäßen Verfahrens mit Nutzung der erfindungsgemäßen Vorrichtung dargestellt.

Zuerst wird beispielsweise eine SMS mit der vom Absender beabsichtigten Textnachricht 1 vom Mobiltelefon 40 des Nutzers an den Gateway MSC 42 versendet. Der Gateway MSC reicht diese Nachricht 1 weiter an den Betreiber SMSC 44 und dieser leitet sie weiter an einen Server 46, wie z.B. den Server des THOR Music Mail Services der Anmelderin. Dort erfolgt eine Prüfung 2, ob eine Zielrufnummer angegeben ist und, ob die gewünschte Zielnummer möglicherweise auf der Ausschlußliste bzw. schwarzen Liste 48 steht, z.B. um zu gewährleisten, daß die öffentliche Ordnung und die guten Sitten eingehalten werden. Ferner kann an dieser Stelle eine separate Verrechnung 3 über geeignete Billingsysteme 50 eingeleitet werden. Nun wird eine Telefonverbindung zum gewünschten Empfänger aufgebaut und danach die SMS mit einer geeigneten TTS-Engine in Sprache konvertiert und zusammen mit der gewünschten Musik abgespielt 4 und dem Telefon 52 des Empfänger übermittelt. Zuletzt erfolgt eine Quittierung 5 an das Mobiltelefon 40 des Absenders.

Die vorstehend diskutierte Erfindung unterstützt mehrere Schnittstellen als Eingabemedien und Textnachrichten, wie dies in Fig. 1 mit den beschrifteten Doppelpfeilen am linken Bildrand angedeutet ist.

Eine mögliche Eingabeform stellt eine SMS-Nachricht dar. Über den Versand einer Standard-SMS, welche innerhalb des Textes wenigstens ein frei definierbares Steuerzeichen enthält, wird diese Nachricht über den Gateway MSC 42 vom SMSC des Betreibers 44 an das THOR Music Mail System 46 geroutet und dort verarbeitet (wie beispielsweise in Fig. 2 schematisch dargestellt). Die Rückmeldung über den Versand geschieht hierbei ebenfalls per SMS an das Handy 40 des Absenders. Am Handy selber müssen hierbei keinerlei zusätzliche Einstellungen betätigt werden.

Sofern eine Textnachricht per eMail abgesandt und dem Adressaten in Form von Sprache übermittelt werden soll, kann ein beliebiger oder auch ein autorisierter Anwender über eine festgelegte eMail-Adresse eine entsprechende eMail mit wenigstens einem Schlüsselwort im Betreff oder Text in der Nachricht eine Music Mail versenden. Die Rückmeldung geschieht hierbei über eine Quittungsmail an den Absender.

Weitere Dienste sind beispielsweise WEB/WAP oder i-Mode. Der Anbieter des jeweiligen Dienstes kann hierbei vorbereitete Eingabemasken im Internet oder als WAP- bzw. i-Mode-Anwendung bereitstellen, welche die Auswahl und Adressierung der Music Mail noch weiter vereinfachen. Die WEB- und WAP- oder i-Mode-Programme/Formulare dienen hierbei lediglich der Eingabe. Der Transport der Nachricht zum THOR Music Mail System kann wieder per eMail oder über eine andere standardisierte Schnittstelle (XML, SOAP, SQL) erfolgen.

Eine beispielhafte Music Mail könnte beispielsweise an die eMail-Adresse MusicMail@CS.speech-design.de gerichtet werden. Als Thema ist das Schlüsselwort "Voice" direkt gefolgt von einem Doppelpunkt und der sich direkt daran anschließenden Rufnummer des Adressaten angegeben. Im Text bzw. Body der eMail ist in der ersten Zeile beispielsweise der Steuerbegriff "#music" gefolgt von einer laufenden Nummer angegeben, mittels dem der gewünschte Musiktitel ausgewählt werden soll. In der folgenden Zeile ist der nachrichtliche Inhalt in geschriebener Form als umformatierter Text wiedergegeben.

Eine solche Music Mail kann natürlich mehrere Schlüsselwörter oder Steuerzeichen enthalten, so daß beispielsweise eine Mehrzahl von Musiktitel angespielt und verschiedene nachrichtliche Inhalte miteinander verknüpft werden können.

Die vorliegende Erfindung schlägt somit erstmals ein Verfahren zum Versenden einer Nachricht an eine beliebige Rufnummer vor, bei dem die zu versendende Nachricht auf einer Textnachricht basiert. Deren Inhalt wird zum Versand in eine Sprachnachricht konvertiert. Hierbei kann der Sprachnachricht ein vom Nutzer des erfindungsgemäßen Verfahrens ausgewählter Musiktitel, Töne, Geräusche oder dergleichen als Hintergrundmusik beigemischt werden. Weiterhin wird erstmals die mit vorstehendem Verfahren erzeugte multimediale Sprachnachricht als auch eine Vorrichtung zur Erzeugung und zum Versand derselben bereit gestellt. Der "THOR Music Mail Service" ist eine bevorzugte Ausführungsform der erfindungsgemäßen Vorrichtung. Er ermöglicht ein besonders kostengünstiges und einfaches Versenden von Textnachrichten in Form von Sprache zusammen mit beliebiger Musik an jedes Telefon, wobei der Empfänger Musik und gesprochenen Text gleichzeitig optimal aufbereitet erhält.

## Patentansprüche

1. Verfahren zum Versenden einer Nachricht an eine beliebige Rufnummer, wobei die zu versendende Nachricht auf einer digitalen elektronischen Textnachricht (1, 10) basiert, deren nachrichtlicher Inhalt zum Versand an die Rufnummer bzw. das zugehörige Telefon (26, 28, 52) in eine Sprachnachricht konvertiert wird, wobei der Sprachnachricht ein vom Auftraggeber bzw. Nutzer des Verfahrens ausgewählter Musiktitel, Töne, Geräusche oder dergleichen als Hintergrundmusik beigemischt wird,
**dadurch gekennzeichnet, daß**
zwischen den Absender und den Empfänger ein computergestützter Music Mail Service (14, 22, 46) geschaltet wird, wobei vermittels des Music Mail Service (14, 22, 46) eine Verbindung zu der in der Nachricht enthaltenen Rufnummer bzw. dem zugehörigen Telefon (26, 28, 52) aufgebaut wird, und wobei die Textnachricht nur dann in die Sprachnachricht konvertiert wird und dieser Sprachnachricht der/die vom Auftraggeber bzw. Nutzer des Verfahrens ausgewälte/n Musiktitel, Töne, Geräusche oder dergleichen als Hintergrundmusik beigemischt werden, wenn eine Verbindung mit der in der Nachricht enthaltenen Rufnummer bzw. dem zugehörigen Telefon (26, 28, 52) zustande kommt.

2. Verfahren nach Anspruch 1, **dadurch gekennzeichnet, daß** die Konvertierung der Textnachricht in die Sprachnachricht vermittels einer geeigneten, auch als TTS-Engine bezeichneten, "Text-to-Speech-Engine" (30) just-in-time erfolgt.

3. Verfahren nach Anspruch 1 oder 2, **dadurch gekennzeichnet, daß** die Beimischung bzw. Einspielung des ausgewählten Musiktitels, Töne, Geräusche oder dergleichen just-in-time erfolgt.

4. Verfahren nach einem der Ansprüche 1 bis 3, **gekennzeichnet durch** folgende Schritte:
i) Absenden einer digitalen elektronischen Textnachricht (1, 10) mit Angabe der Rufnummer des Adressaten sowie des gewünschten Musiktitels, Töne, Geräusche oder dergleichen, vorzugsweise von jedem beliebigen eMail-Konto, Internet-Zugang, SMS-, WAP-, oder i-mode-fähigen Telefon (40) an einen computergestützten Music Mail Service (14, 22, 46),
ii) Analyse der Textnachricht (1, 10) auf nachrichtliche Bestandteile, Rufnummern, Schlüsselwörter und/oder andere Steuerzeichen,
iii) Auswertung der Schlüsselwörter und/oder anderer Steuerzeichen,
iv) Anwahl und Aufbau einer Telefonverbindung zur gewünschten Rufnummer,
v) Aufrufen und Einspielen der gewünschten Musikinformationen,
vi) Konvertieren der nächrichtlichen Bestandteile der Textnachricht in eine Sprachnachricht vermittels einer geeigneten TTS-Engine (30), vorzugsweise unter automatischer Bestimmung der im Text vorgegebenen Sprache, sowie
vii) Versenden der um die Musikinformationen ergänzten Sprachnachricht (4) an die angegebene Rufnummer.

5. Verfahren nach Anspruch 4, **dadurch gekennzeichnet, daß** die Schritte iv) bis vii) zeitgleich bzw. parallel oder just-in-time ausgeführt werden.

6. Verfahren nach einem der Ansprüche 1 bis 5, **dadurch gekennzeichnet, daß** eine Auftragsbestätigung und/oder eine Ausführungsbestätigung (5) an den Auftraggeber bzw. Nutzer versandt wird.

7. Verfahren nach einem der Ansprüche 1 bis 6, **dadurch gekennzeichnet, daß** die multimediale Nachricht von jedem beliebigen eMail-Konto, Internet-Zugang, SMS-, WAP-, oder i-mode-fähigen Telefon (40) in Auftrag gegeben werden kann.

8. Verfahren nach einem der Ansprüche 1 bis 6, **dadurch gekennzeichnet, daß** die multimediale Nachricht an jedes beliebige Telefon (26, 28, 52) versandt werden kann.

9. Vorrichtung zur Erzeugung und zum Versand einer multimedialen Nachricht unter Verwendung des Verfahrens nach einem der Ansprüche 1 bis 8, mit einer computergestützten Eingangseinheit (14) zum Empfang digitaler elektronischer Textnachrichten, einer computergestützten Auswerteeinheit (12) zur Analyse der Textnachricht auf nachrichtliche Bestandteile, Rufnummern, Schlüsselwörter und/oder andere Steuerzeichen, einer Text-to-Speech-Engine (30) zur Konvertierung des nachrichtlichen Bestandteils in eine Sprachnachricht, einer computergestützten Mischeinheit (32) zum Aufruf und zur Beimischung der Toninformationen des gewünschten Musiktitels oder dgl. als Hintergrundmusik und einer computergestützten Ausgabeeinheit (22, 24) zum Versand der multimedialen Sprachnachricht inkl. beigemischter Hintergrundmusik an die gewünschte Rufnummer (26, 28, 52), wobei zwischen den Absender und den Empfänger ein computergestützter Music Mail Service (14, 22, 46) geschaltet und derart ausgestaltet ist, dass eine Verbindung zu der in des Nachricht enthaltenen Rufnummer bzw. dem zugehörigen Telefon (26, 28, 52) aufgebaut wird, wobei die Textnachricht nur dann in eine Sprachnachricht konvertiert wird und dieser Sprachnachricht der/die vom Auftraggeber bzw. Nutzer des Verfahrens ausgewählte/n Musiktitel, Töne, Geräusche oder dergleichen als Hintergrund musik beigemischt werden, wenn eine Verbindung mit der in der Nachricht enthaltenen Rufnummer bzw. dem zugehörigen Telefon (26, 28, 52) zustande kommt.

## Claims

1. Process for sending a message to any call number, wherein the message to be sent is based on a digital electronic text message (1, 10), the message content of which for sending to the call number or the associated telephone (26, 28, 52) being converted into a voice message, wherein a music title, sounds, noises or the like selected by the customer or user of the process is added to the voice message as background music, **characterised in that** a computer-assisted Music Mail Service (14, 22, 46) is connected between the sender and the receiver, wherein a connection to the call number or the associated telephone (26, 28, 52) present in the message is set up by means of the Music Mail Service (14, 22, 46), and wherein the text message is converted to the voice message and the music title, sounds, noises or the like selected by the customer or user of the process are added to this voice message as background music only when a connection to the call number or the associated telephone (26, 28, 52) present in the message is achieved.

2. Process according to claim 1, **characterised in that** the conversion of the text message to the voice message is effected just-in-time by means of a suitable "Text-to-Speech engine" (30) also designated as TTS engine.

3. Process according to claim 1 or 2, **characterised in that** the adding or importing of the selected music title, sounds, noises or the like is effected just-in-time.

4. Process according to one of claims 1 to 3, **characterised by** the following steps:
i) sending a digital electronic text message (1, 10) with detail of the call number of the addressee and of the required music title, sounds, noises or the like, preferably from any email account, Internet access, SMS, WAP, or i-mode-enabled telephone (40) to a computer-assisted Music Mail Service (14, 22, 46),
ii) analysis of the text message (1, 10) for message components, call numbers, keywords and/or other control characters,
iii) evaluation of the keywords and/or other control characters,
iv) dialling and set-up of a telephone connection to the required call number,
v) calling and importing of the required music information,
vi) converting the message components of the text message to a voice message by means of a suitable TTS engine (30), preferably with automatic determination of the language preset in the text, and
vii) sending of the voice message (4) supplemented by the music information to the indicated call number.

5. Process according to claim 4, **characterised in that** the steps iv) to vii) are executed at the same time or in parallel or just-in-time.

6. Process according to one of claims 1 to 5, **characterised in that** an order confirmation and/or an execution confirmation (5) is sent to the customer or user.

7. Process according to one of claims 1 to 6, **characterised in that** the multi-media message may be ordered by any email account, Internet access, SMS, WAP, or i-mode-enabled telephone (40).

8. Process according to one of claims 1 to 6, **characterised in that** the multi-media message may be sent to any telephone (26, 28, 52).

9. Device for producing and for sending a multi-media message using the process according to one of claims 1 to 8, having a computer-assisted input unit (14) to receive digital electronic text messages, a computer-assisted evaluating unit (12) for the analysis of the text message for message components, call numbers, keywords and/or other control characters, a Text-to-Speech engine (30) for converting the message component to a voice message, a computer-assisted mixing unit (32) to call and to add the sound information of the required music title or the like as background music and a computer-assisted output unit (22, 24) to send the multi-media voice message including added background music to the required call number (26, 28, 52), wherein a computer-assisted Music Mail Service (14, 22, 46) is connected between the sender and the receiver and designed such that a connection to the call number or the associated telephone (26, 28, 52) present in the message is set up, wherein the text message is converted to a voice message and the music title, sounds, noises or the like selected by the customer or user of the process are added to this voice message as background music only when a connection to the call number or the associated telephone (26, 28, 52) present in the message is achieved.

## Revendications

1. Procédé pour envoyer un message à un numéro d'appel quelconque, le message à envoyer étant basé sur un message écrit (1, 10) électronique numérique, dont le contenu est converti en message vocal en vue de son envoi vers le numéro d'appel ou le téléphone (26, 28, 52) associé, un titre de musique, des sons, des bruits ou similaires, sélectionnés par le donneur d'ordre ou utilisateur du procédé, étant ajoutés au message vocal en tant que musique de fond,
**caractérisé en ce que**
un service de message musical (14, 22, 46) assisté par ordinateur est monté entre l'expéditeur et le destinataire, une liaison étant établie au moyen du service de message musical (14, 22, 46) vers le numéro d'appel, contenu dans le message, ou le téléphone (26, 28, 52) associé, et le message écrit n'étant converti en message vocal et un titre de musique, des sons, des bruits ou similaires, sélectionnés par le donneur d'ordre ou utilisateur du procédé, n'étant ajoutés au message vocal en tant que musique de fond que lorsqu'une liaison est établie avec le numéro d'appel, contenu dans le message, ou le téléphone (26, 28, 52) associé.

2. Procédé selon la revendication 1, **caractérisé en ce que** la conversion du message écrit en message vocal est effectuée juste-à-temps (just-in-time) au moyen d'un moteur TTS (30) approprié, également dénommé moteur « Text-to-Speech ».

3. Procédé selon la revendication 1 ou 2, **caractérisé en ce que** l'ajout ou l'intégration du titre de musique, des sons, des bruits ou similaires est effectué juste-à-temps.

4. Procédé selon l'une quelconque des revendications 1 à 3, **caractérisé par** les étapes suivantes :
i) envoi d'un message écrit (1, 10) électronique numérique, dans lequel sont indiqués le numéro d'appel du destinataire ainsi que le titre de musique, les sons, les bruits ou similaires souhaités, de préférence à partir de n'importe quel compte eMail, accès Internet, téléphone (40) avec fonction SMS, WAP ou i-mode vers un service de message musical (14, 22, 46) assisté par ordinateur ;
ii) analyse du message écrit (1, 10) pour en ressortir les composants du message, les numéros d'appel, les mots de passe et / ou d'autres attributs de commande ;
iii) évaluation des mots de passe et / ou autres attributs de commande ;
iv) sélection et établissement d'une liaison téléphonique vers le numéro d'appel souhaité ;
v) chargement et intégration des informations musicales souhaitées ;
vi) conversion des composants du message écrit en un message vocal au moyen d'un moteur TTS (30) approprié, de préférence moyennant la détermination automatique de la langue indiquée dans le texte ; ainsi que
vii) envoi du message vocal (4), complété par les informations musicales, vers le numéro d'appel indiqué.

5. Procédé selon la revendication 4, **caractérisé en ce que** les étapes iv) à vii) sont effectuées simultanément et parallèlement ou juste-à-temps.

6. Procédé selon l'une quelconque des revendications 1 à 5, **caractérisé en ce qu'**une confirmation de commande et / ou une confirmation d'exécution (5) sont envoyées au donneur d'ordre ou utilisateur.

7. Procédé selon l'une quelconque des revendications 1 à 6, **caractérisé en ce que** le message multimédia peut être commandé à partir de n'importe quel compte eMail, accès Internet, téléphone (40) avec fonction SMS, WAP ou i-mode.

8. Procédé selon l'une quelconque des revendications 1 à 6, **caractérisé en ce que** le message multimédia peut être envoyé vers n'importe quel téléphone (26, 28, 52).

9. Dispositif destiné à générer et à envoyer un message multimédia moyennant l'application du procédé selon l'une quelconque des revendications 1 à 8, comportant une unité d'entrée (14) assistée par ordinateur, destinée à recevoir les messages écrits électroniques numériques, une unité d'analyse (12) assistée par ordinateur, destinée à analyser le message écrit pour en ressortir les composants du message, les numéros d'appel, les mots de passe et / ou d'autres attributs de commande, un moteur TTS (30) pour convertir les composants du message en un message vocal, une unité de mixage (32) assistée par ordinateur, destinée à charger et ajouter en tant que musique de fond des informations audio du titre de musique souhaité ou similaire, et une unité d'édition (22, 24) assistée par ordinateur, destinée à envoyer le message vocal multimédia, y compris la musique de fond intégrée vers le numéro d'appel souhaité (26, 28, 52), un service de message musical (14, 22, 46) assisté par ordinateur étant monté entre l'expéditeur et le destinataire et étant conçu de telle sorte qu'une liaison est établie vers le numéro d'appel, contenu dans le message, ou vers le téléphone (26, 28, 52) associé, le message écrit n'étant converti en message vocal et un titre de musique, des sons, des bruits ou similaires, sélectionnés par le donneur d'ordre ou utilisateur du procédé, n'étant ajoutés comme musique de fond au message vocal que lorsqu'une liaison est établie avec le numéro d'appel, contenu dans le message, ou avec le téléphone (26, 28, 52) associé.
